# EUROPÄISCHE PATENTSCHRIFT

(11) **EP 0 476 266 B1**
(45) Veröffentlichungstag und Bekanntmachung des Hinweises auf die Patenterteilung: **17.08.1994**
(21) Anmeldenummer: 91112367.7
(22) Anmeldetag: 24.07.1991
(51) Int. Cl.: A01C 7/04, A01C 7/00, A01B 69/02

(54) **Überwachungseinrichtung für eine Sä- oder Drillmaschine**
Control device for a seeder
Dispositif de contrôle pour un semoir

(30) Priorität: 21.09.1990 DE 9013347 U
(43) Veröffentlichungstag der Anmeldung: 25.03.1992
(73) Patentinhaber: Rabewerk GmbH + Co., 49152 Bad Essen (DE)
(72) Erfinder: Gehrke, Rudolf, Dipl.-Ing., W-2990 Aschendorf (DE)
(74) Vertreter: Missling, Arne, Dipl.-Ing.

(56) Entgegenhaltungen:
- EP-A- 0 254 118
- AU-B- 497 267
- DE-A- 3 714 642
- DE-A- 3 834 977
- DE-U- 8 806 279
- FR-A- 2 232 979
- GB-A- 2 061 518
- GB-A- 2 217 043

## Beschreibung

Die Erfindung bezieht sich auf eine Überwachungseinrichtung für eine Sä- oder Drillmaschine mit zumindest zwei Sensoren, welche mit einer Schaltungs- und Steuereinrichtung verbunden sind, welche mit zumindest einer Anzeigeeinrichtung in Betriebsverbindung steht.

Aus dem Stand der Technik sind eine Vielzahl von Sensor- oder Überwachungseinrichtungen bekannt, mit deren Hilfe es für den Benutzer einer Bodenbearbeitungsmaschine möglich ist, die jeweiligen Betriebszustände und Arbeitsbedingungen zu überprüfen. Da insbesondere die Einbringung von Saatgut in ein Saatbett exakt gesteuert werden muß, um das Saatgut in der gewünschten Verteilung und in der erforderlichen Arbeitstiefe im Erdreich abzulegen, und um bei minimalem Einsatz von Saatgut ein maximales Pflanzergebnis zu erzielen, ist es erforderlich, die einzelnen Funktionen der Sä- oder Drillmaschine exakt zu überwachen. Weiterhin haben die bekannten Sä- oder Drillmaschinen eine Leistungsfähigkeit, welche es wünschenswert macht, den gesamten Vorgang möglichst weitgehend zu automatisieren, um die Bedienungsperson zu entlasten und um den Wirkungsgrad zu erhöhen. Aus dem Stand der Technik ist ein Überwachungsgerät bekannt, welches in Form einer Anzeige- und Eingabeeinrichtung die Überwachung der verschiedensten Betriebszustände ermöglicht. So ist beispielsweise vorgesehen, an dieses Gerät einen Tankreservemelder anzuschließen, sowie jeweils mindestens einen Sensor zur Bestimmung der Gebläsedrehzahl, der Mindestdrehzahl des Gebläses, der Dosiergerätüberwachung, der Antriebsradüberwachung und der Überwachung der Spannungsversorgung. Dabei ist es bei diesem Überwachungsgerät zwar bekannt, mittels der jeweiligen Sensoren die Einhaltung der Soll-Grenzen festzustellen, um der Bedienungsperson bei Abweichungen ein Signal zu geben. Der Nachteil dieses Gerätes besteht jedoch darin, daß die Bedienungsperson das Gerät separat einschalten muß. Dies ist jedoch ausgesprochen ungünstig, da bei jedem Anhalten der Sä- oder Drillmaschine sowie bei jedem Wenden im Vorgewende akustische oder optische Anzeigen auftreten, welche den Fahrer auf einen vermeintlichen Fehler oder eine Betriebsstörung hinweisen. Durch diese Fehlinformationen wird die Bedienungsperson abgelenkt, so daß bei Auftreten einer echten Betriebsstörung diese nicht oder nur schwer erkannt wird. Weiterhin besteht insbesondere bei akustischen Anzeigen die Gefahr, daß die Bedienungsperson diese ausschaltet, um Störungen beim Anhalten oder Wenden zu unterbinden.

Der Stand der Technik zeigt eine Vielfalt von Möglichkeiten zur Ausgestaltung der einzelnen Sensoren. Die Überwachung mehrerer Funktionen eines landwirtschaftlichen Fahrzeuges ist aus der EP-B1-070833 bekannt. Hierbei werden insbesondere die Betriebsparameter eines Schleppers überwacht. Die Kontrolle des Füllstandes des Tanks einer Sämaschine beschreibt die DE-OS 3443360, eine ähnliche Kontrollvorrichtung zeigt die DE-OS 3217010. Die Förderung des Saatgutes wird durch Einrichtungen überwacht, welche beispielsweise in der DE-PS 66976, der DE-OS 3714642, der DE-OS 2428485, sowie der DE-GBM 6604143 beschrieben sind. Kontrolleinrichtungen für das jeweilige Saatgut zeigen die DE-OS 2614959 sowie die DE-OS 2815873. Die Kontrolle des Flusses des Saatgutes in Särohren, welche Fahrgassen zugeordnet sind, offenbart die DE-OS 3624515. Aus der US-PS 3,912,121 ist eine Vorrichtung bekannt, mit Hilfe derer die Ablagedichte kontrolliert und einjustiert werden kann.

Aus der DE-U-8806279.1 ist eine Überwachungseinrichtung mit den Merkmalen der Oberbegriffe der Ansprüche 1 und 2 bekannt, bei der die Warnsignale beim Stillstand der Maschine unterdrückt werden. Es werden somit die Warnsignale vermieden, die beim Stillstand der Maschine eintreten. Nicht erfaßt werden hingegen die Warnsignale, die immer noch auftreten können beim Wenden im Vorgewende. Darüber hinaus ist diese bekannte Einrichtung aufwendig in ihrer Herstellung und auch nicht in jedem Fall störungssicher.

Der Erfindung liegt die Aufgabe zugrunde, eine Überwachungseinrichtung der eingangs genannten Art zu schaffen, welche bei einfachem Aufbau und einfacher, betriebssicherer Handhabbarkeit die Übermittlung von Fehlsignalen ausschließt und eine anwendungsbezogene und praxisorientierte Überwachungsfunktion ausübt.

Erfindungsgemäß wird die Aufgabe dadurch gelöst, daß an einem Antriebsrad der Sä- oder Drillmaschine oder einer mit dieser verbundenen Maschine ein Drehsensor angeordnet ist, welcher zum Inbetriebnehmen der Überwachungseinrichtung bei Drehung des Antriebsrades mit einem Schaltkreis der Schaltungs- und Steuereinrichtung verbunden ist, so daß die Überwachung nur in Betriebszuständen erfolgt. Die Aufgabe wird erfindungsgemäß auch dadurch gelöst, daß ein Schaltkreis der Schaltungs- und Steuereinrichtung mit einem Spurreißer-Sensor verbunden ist, welcher Signale in Abhängigkeit vom Absenken oder Anheben eines Spurreißers zur Inbetriebnahme der Überwachungsvorrichtung bei abgesenktem Spurreißer abgibt.

Erfindungsgemäß ist es somit möglich, die Überwachungseinrichtung entweder durch Drehung des Laufrades oder durch Absenken des Spurreißers oder durch eine Kombination vorzunehmen.

Die erfindungsgemäße Überwachungseinrichtung zeichnet sich durch eine Reihe erheblicher Vorteile aus. Da das Antriebsrad nur dann gedreht wird, wenn sich die Sä- oder Drillmaschine in Bewegung befindet, wird die Abgabe von Anzeigesignalen unterdrückt, wenn die Maschine zum Stillstand gekommen ist. Erfindungsgemäß wird somit die Überwachungseinrichtung nur dann in Betrieb genommen, wenn sie von der Bedienungsperson wirklich benötigt wird, nämlich nur während der Fahrt über das Feld. Da nur dann das Antriebsrad für die Dosiereinrichtung gedreht wird, erfolgt die Überwachung nur in Betriebszuständen, in welchen aktuell Saatgut eingebracht wird.

In einer besonders günstigen Weiterbildung der Erfindung ist vorgesehen, daß der Schaltkreis mit einem Spurreißer-Sensor verbunden ist, welcher Signale in Abhängigkeit vom Absenken oder Anheben eines Spurreißers zur Inbetriebnahme der Überwachungseinrichtung abgibt. Bei dieser Ausgestaltungsform der Erfindung ist es besonders günstig, daß beim Absenken des Spurreißers die Überwachungseinrichtung eingeschaltet wird und die Bedienungsperson somit auch im Stillstand der Sä- oder Drillmaschine bei abgesenktem Spurreißer die Überwachungs-Anzeigen auswerten kann. Dies kann insbesondere bei der Fehlersuche günstig sein. Erfindungsgemäß besteht auch die Möglichkeit, die Überwachungseinrichtung lediglich beim Absenken des Spurreißers einzuschalten. Dies hätte zwar zur Folge, daß die Anzeigeeinrichtungen auch bei einem Anhalten der Sä- oder Drillmaschine in Betrieb sind und einen möglichen Fehler melden, da während der normalen Fahrt über ein Feld jedoch nicht angehalten wird, kann dieser Aspekt außer Acht gelassen werden.

Die Anzeigeeinrichtung kann erfindungsgemäß jeweils eine optische Anzeige umfassen, welche dem Sensor oder den mehreren Sensoren zugeordnet ist, es ist auch möglich, eine akustische Anzeige vorzusehen. Die einzelnen Sensoren können beispielsweise das Gebläse der Sä- oder Drillmaschine überwachen, oder den Tankinhalt, die Dosiereinrichtung, die Menge des durch ein Saatrohr geleiteten Saatgutes, den Antrieb einer Dosiereinrichtung, die Fahrgassenschaltung sowie die Fahrgeschwindigkeit des Antriebsrads. Letzteres kann ein Laufrad oder ein Spornrad sein, so daß Abweichungen von der gewünschten Fahrgeschwindigkeit ebenfalls angezeigt werden. Bei einer Überwachung des Gebläses einer Sämaschine, insbesondere einer Drillmaschine pneumatischer Bauart wird bevorzugt der Luftdruck überwacht, es ist auch möglich, die geförderte Luftmenge oder die Drehzahl zu überwachen. Wie bei der Überwachung des Tankinhaltes ist der Sensor bevorzugt so ausgebildet, daß er bei Unterschreiten einer vorgegebenen Mindestmenge ein Signal abgibt, wobei die Mindestmenge ausreichend ist, eine Mindeststrecke abzufahren. Die Überwachung der Dosiereinrichtung erfolgt bevorzugt so, daß jedes Saatrohr einzeln überwacht wird, um den Ausfall eines einzelnen Saatrohres feststellen zu können. Beim Überwachen des Antriebs der Dosiereinrichtung ist der Sensor bevorzugt so ausgebildet, daß er die Laufräder oder das Spornrad, welche allein zum Antrieb der Dosiereinrichtung dienen, überwacht, um eine entsprechende Information über die Drehung des Rades abzugeben. Hinsichtlich der Überwachung der den Fahrgassen zugeordneten Saatrohre ist es wichtig, in üblicher Weise eine Fahrgassensteuerung vorzunehmen, damit für spätere Fahrten zur Düngung oder Unkrautbekämpfung die einzelnen Saatrohre außer Betrieb gesetzt werden können. Die Fahrgassen müssen periodisch angeordnet werden, z.B. wird hierzu eine Schaltung verwendet, welche über Zählwerke bzw. Rechner gesteuert ist und eine periodische Absperrung der entsprechenden Saatrohre bewirkt. Es ist selbstverständlich möglich, weitere Sensoren zur Überwachung weiterer Betriebsparameter vorzusehen.

Die kombinierte Verwendung von optischen und akustischen Signalen hat den erheblichen Vorteil, daß während der Fahrt des Schleppers das akustische Signal möglicherweise wegen der Schlepper- und Maschinengeräusche überhört werden kann. In diesem Falle ist das optische Signal von Wichtigkeit. Bei einem Anhalten des Schleppers erniedrigen sich die Fahr- und Maschinengeräusche, so daß das akustische Signal durch den Fahrer zweifelsfrei wahrnehmbar ist. Sofern dieses beim Anhalten des Schleppers erlischt, kann der Fahrer mit Hilfe des optischen Signales weiterhin feststellen, ob Fehler vorliegen. Dabei bieten insbesondere die optischen Signale die Möglichkeit, den Fehler zu lokalisieren und fehlerhafte Einrichtungen zu ermitteln.

Im folgenden wird die Erfindung anhand eines Ausführungsbeispieles in Verbindung mit der Zeichnung beschrieben, dabei zeigt:

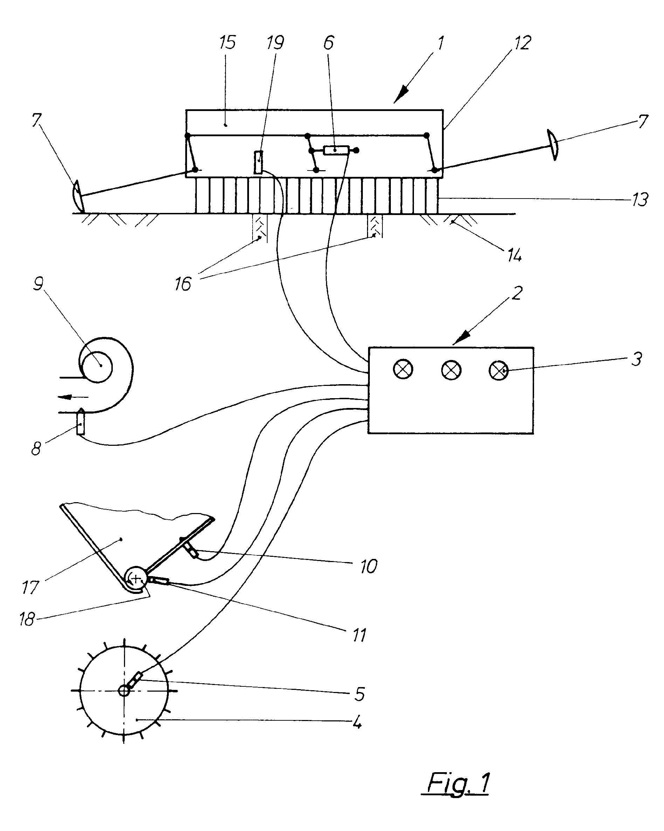

- Fig. 1: eine schematische Darstellung der erfindungsgemäßen Überwachungseinrichtung sowie einer zugeordneten Sä- oder Drillmaschine.

Die Fig. 1 zeigt in schematischer Weise eine stirnseitige Ansicht einer Sä- oder Drillmaschine 1, in deren Gehäuse 12 die aus dem Stand der Technik bekannten Aggregate untergebracht sind. In Fig. 1 sind eine Vielzahl parallel zueinander angeordnete Saatrohre dargestellt, welche jeweils mit Säscharen versehen sind, mit Hilfe derer Saatgut in den Boden 14 abgelegt werden kann.

Die Sä- oder Drillmaschine ist mit seitlichen Spurreißern 7 ausgerüstet, welche jeweils mit einem umschaltbaren Gestänge 15 verbunden sind. Das Gestänge 15 ist mit einer Wechselkinematik versehen, so daß jeweils einer der Spurreißer auf den Boden 14 abgesenkt werden kann.

Die Fig. 1 zeigt weiterhin in schematischer Weise Fahrgassen bzw. Fahrspuren 16, in welchen kein Saatgut abzulegen ist.

Die erfindungsgemäße Überwachungseinrichtung umfaßt weiterhin eine Schaltungs- und Steuereinrichtung 2, welche mit einer Anzeigeeinrichtung 3 versehen ist. Die Anzeigeeinrichtung 3 kann optischer oder akustischer Art sein.

Die Schaltungs- und Steuereinrichtung 2 ist mit einem Drehsensor 5 betriebsverbunden, welcher einem Antriebsrad 4 der Dosiereinrichtung zugeordnet ist. Das Antriebsrad ist in Form eines Spornrades oder eines Laufrades ausgebildet und dient ausschließlich zum Antrieb der Dosiereinrichtung. Bei einer Drehung des Antriebsrades 4 wird die Schaltungs- und Steuereinrichtung 2 durch die von dem Drehsensor 5 abgegebenen Signale eingeschaltet.

Weiterhin ist das Gestänge 15 mit einem Spurreißer-Sensor 6, der einen Wechselmechanismus enthalten kann, betriebsverbunden, welcher ein Absenken eines der beiden Spurreißer 7 auf den Boden 14 meldet. Durch die von dem Spurreißer-Sensor 6 abgegebenen Signale wird die Schaltungs- und Steuereinrichtung 2 eingeschaltet, sobald einer der Spurreißer 7 in den Boden 14 eingesetzt ist.

Das Einschalten kann durch den Spurreißer-Sensor 6, oder den Drehsensor 5, oder auch in Kombination durch beide erfolgen.

Weiterhin umfaßt die erfindungsgemäße Einrichtung einen ersten Sensor 8, welcher zur Überwachung eines Gebläses 9 der Sä- oder Drillmaschine 1 dient. Ein zweiter Sensor 10 ist in einer Wandung eines in Fig. 1 schematisch in der Seitenansicht dargestellten Saatkastens 17 eingesetzt, um den Inhalt des Saatkastens festzustellen. Weiterhin ist ein dritter Sensor 11 vorgesehen, mit welchem die Funktion eines Dosierrades 18 oder aller am unteren Bereich des Saatkastens 17 feststellbar ist.

Die Sä- oder Drillmaschine 1 umfaßt weiterhin einen Sensor 19, mit welchem eine entsprechende Fahrgassenschaltung zur Ausbildung der Fahrgasse 16 und zur Sperrung des zugeordneten Saatrohres überwachbar ist.

Es versteht sich für den Fachmann von selbst, daß einige Sensoren auch bei Stillstand der Sä- oder Drillmaschine 1 Meßwerte aufnehmen können, so beispielsweise der Sensor 8 im Bereich des Gebläses 9, sofern es sich um eine pneumatische Sämaschine handelt. Da das Gebläse 9 bei Beginn des Saatvorganges bereits die richtige Drehzahl haben muß, kann es zweckmäßig sein, die Kontrolle des Gebläses durch den Sensor 8 unabhängig vom Schalten der Schaltungs- und Steuereinrichtung 2 vorzunehmen.

## Patentansprüche

1. Überwachungsvorrichtung für eine Sä- oder Drillmaschine (1) mit zumindest zwei Sensoren, welche mit einer Schaltungs- und Steuereinrichtung (2) verbunden sind, welche mit zumindest einer Anzeigeeinrichtung (3) in Betriebsverbindung steht, dadurch gekennzeichnet, daß an einem Antriebsrad (4) der Sä- oder Drillmaschine (1) oder einer mit dieser verbundenen Maschine ein Drehsensor (5) angeordnet ist, welcher zum Inbetriebnehmen der Überwachungsvorrichtung bei Drehung des Antriebsrades (4) mit einem Schaltkreis der Schaltungs- und Steuereinrichtung (2) verbunden ist, so daß die Überwachung nur in Betriebszuständen erfolgt.

2. Überwachungsvorrichtung für eine Sä- oder Drillmaschine (1) mit zumindest zwei Sensoren, welche mit einer Schaltungs- und Steuereinrichtung (2) verbunden sind, welche mit zumindest einer Anzeigeeinrichtung (3) in Betriebsverbindung steht, dadurch gekennzeichnet, daß ein Schaltkreis der Schaltungs- und Steuereinrichtung (2) mit einem Spurreißer-Sensor Sensor (6) verbunden ist, weicher Signale in Abhängigkeit vom Absenken oder Anheben eines Spurreißers (7) zur Inbetriebnahme der Überwachungsvorrichtung bei abgesenktem Spurreißer (7) abgibt.

3. Überwachungsvorrichtung nach Anspruch 1 oder 2, dadurch gekennzeichnet, daß der Schaltkreis mit dem Drehsensor (5) und oder dem Spurreißer-Sensor (6) verbunden ist.

4. Überwachungsvorrichtung nach einem der Ansprüche 1 bis 3, dadurch gekennzeichnet, daß die Anzeigeeinrichtung (3) mit zumindest einer, dem Sensor zugeordneten optischen Anzeige versehen ist.

5. Überwachungsvorrichtung nach Anspruch 4, dadurch gekennzeichnet, daß mehrere Sensoren mit zugeordneten optischen Anzeigen vorgesehen sind.

6. Überwachungsvorrichtung nach einem der Ansprüche 1 bis 5, dadurch gekennzeichnet, daß die Anzeigeeinrichtung zumindest eine akustische Anzeige umfaßt.

7. Überwachungsvorrichtung nach einem der Ansprüche 1 bis 6, dadurch gekennzeichnet, daß ein erster Sensor (8) zur Überwachung eines Gebläses (9) der Sä- oder Drillmaschine (1) vorgesehen ist.

8. Überwachungsvorrichtung nach einem der Ansprüche 1 bis 7, dadurch gekennzeichnet, daß ein zweiter Sensor (10) zur Überwachung des Tankinhaltes der Sä- oder Drillmaschine vorgesehen ist.

9. Überwachungsvorrichtung nach einem der Ansprüche 1 bis 8, dadurch gekennzeichnet, daß ein dritter Sensor (11) zur Überwachung einer Dosiereinrichtung der Sä- oder Drillmaschine vorgesehen ist.

10. Überwachungsvorrichtung nach einem der Ansprüche 1 bis 9, dadurch gekennzeichnet, daß ein vierter Sensor zur Mengenüberwachung der durch ein Saatrohr geleiteten Saatgutmenge vorgesehen ist.

11. Überwachungsvorrichtung nach einem der Ansprüche 1 bis 10, dadurch gekennzeichnet, daß ein fünfter Sensor zur Überwachung des Antriebs einer Dosiereinrichtung vorgesehen ist.

12. Überwachungsvorrichtung nach einem der Ansprüche 1 bis 11, dadurch gekennzeichnet, daß ein sechster Sensor zur Überwachung der Fahrgassenschaltung vorgesehen ist.

13. Überwachungsvorrichtung nach einem der Ansprüche 1 bis 12, dadurch gekennzeichnet, daß ein siebter Sensor zur Überwachung der Fahrgeschwindigkeit des Antriebsrades (4) vorgesehen ist.

14. Überwachungsvorrichtung nach einem der Ansprüche 1 bis 13, dadurch gekennzeichnet, daß die Schaltungs- und Steuereinrichtung (2) mit Mitteln zur Eingabe des jeweiligen Sollwertes und zur Justierung des Sensors versehen ist.

15. Überwachungsvorrichtung nach einem der Ansprüche 1 bis 14, dadurch gekennzeichnet, daß eine Betätigungsmechanik des Spurreißers (7) zur automatischen Umschaltung des Spurreißers (7) am Feldende mit der Schaltungs- und Steuereinrichtung (2) betriebsverbunden ist.

## Claims

1. A monitoring device for a sowing or drilling machine (1), having at least two sensors which are connected to a switching and control device (2) operationally connected to at least one indicating device (3), characterised in that a rotation sensor (5) is arranged on a drive wheel (4) of the sowing or drilling machine (1) or of a machine connected to the latter, which rotation sensor (5) is - for the purpose of putting the monitoring device into operation upon rotation of the drive wheel (4) - connected to a switching circuit of the switching and control device (2) so that the monitoring only takes place in operational states.

2. A monitoring device for a sowing or drilling machine (1), having at least two sensors which are connected to a switching and control device (2) operationally connected to at least one indicating device (3), characterised in that a switching circuit of the switching and control device (2) is connected to a marker sensor (6) which emits signals dependent on the lowering or raising of a marker (7) in order to put the monitoring device into operation when the marker (7) is in the lowered position.

3. A monitoring device in accordance with Claim 1 or 2, characterised in that the switching circuit is connected to the rotation sensor (5) and/or to the marker sensor (6).

4. A monitoring device in accordance with any one of Claims 1 to 3, characterised in that the indicating device (3) is provided with at least one visual indicator associated with the sensor.

5. A monitoring device in accordance with Claim 4, characterised in that a plurality of sensors with associated visual indicators are provided.

6. A monitoring device in accordance with any one of Claims 1 to 5, characterised in that the indicating device comprises at least one audible indicator.

7. A monitoring device in accordance with any one of Claims 1 to 6, characterised in that a first sensor (8) for monitoring a blower (9) of the sowing or drilling machine (1) is provided.

8. A monitoring device in accordance with any one of Claims 1 to 7, characterised in that a second sensor (10) for monitoring the contents level of the container of the sowing or drilling machine is provided.

9. A monitoring device in accordance with any one of Claims 1 to 8, characterised in that a third sensor (11) for monitoring a metering device of the sowing or drilling machine is provided.

10. A monitoring device in accordance with any one of Claims 1 to 9, characterised in that a fourth sensor for monitoring the quantity of seed carried through a seed pipe is provided.

11. A monitoring device in accordance with any one of Claims 1 to 10, characterised in that a fifth sensor for monitoring the drive of a metering device is provided.

12. A monitoring device in accordance with any one of Claims 1 to 11, characterised in that a sixth sensor for monitoring the travel-strip circuit is provided.

13. A monitoring device in accordance with any one of Claims 1 to 12, characterised in that a seventh sensor for monitoring the travelling speed of the drive wheel (4) is provided.

14. A monitoring device in accordance with any one of Claims 1 to 13, characterised in that the switching and control device (2) is provided with means for entering the respective desired value and for adjusting the sensor.

15. A monitoring device in accordance with any one of Claims 1 to 14, characterised in that an operating mechanism of the marker (7) for automatically changing over the marker (7) at the end of the field is operationally connected to the switching and control device (2).

## Revendications

1. Dispositif de contrôle pour un semoir ou un semoir en lignes (1) comportant au moins deux capteurs, qui sont reliés à un dispositif de commutation et de commande (2), lequel est relié selon une liaison de service à au moins un dispositif indicateur (3), caractérisé en ce que, sur une roue motrice (4) du semoir ou du semoir en lignes (1) ou d'une machine reliée à ce semoir, est disposé un capteur de rotation (5), qui, pour la mise en service du dispositif de contrôle, est relié, lors de la rotation de la roue motrice (4), à un circuit du dispositif de commutation et de commande (2), si bien que le contrôle n'a lieu que lors du service.

2. Dispositif de contrôle pour un semoir ou un semoir en lignes (1) comportant au moins deux capteurs, qui sont reliés à un dispositif de commutation et de commande (2), lequel est relié selon une liaison de service à au moins un dispositif indicateur (3), caractérisé en ce qu'un circuit du dispositif de commutation et de commande (2) est relié à un capteur (6) d'un soc de formation de sillons, qui délivre des signaux en fonction de l'abaissement ou du soulèvement d'un soc (7) de formation de sillons pour la mise en service du dispositif de contrôle lorsque le soc (7) est abaissé.

3. Dispositif de contrôle selon la revendication 1 et/ou la revendication 2, caractérisé en ce que le circuit est relié au capteur de rotation (5) et/ou au capteur (6) du soc de formation de sillons.

4. Dispositif de contrôle suivant l'une des revendications 1 à 3, caractérisé en ce que le dispositif indicateur (3) comporte au moins un dispositif d'affichage optique associé au capteur.

5. Dispositif de contrôle selon la revendication 4, caractérisé en ce qu'il est prévu plusieurs capteurs, à chacun desquels est associé un dispositif d'affichage optique.

6. Dispositif de contrôle selon l'une des revendications 1 à 5, caractérisé en ce que le dispositif indicateur comprend au moins un dispositif acoustique.

7. Dispositif de contrôle selon l'une des revendications 1 à 6, caractérisé en ce qu'il est prévu un premier capteur (8) pour contrôler un ventilateur (9) du semoir ou semoir en lignes (1).

8. Dispositif de contrôle selon l'une des revendications 1 à 7, caractérisé en ce qu'il est prévu un second capteur (10) pour contrôler le contenu du réservoir du semoir ou semoir en lignes.

9. Dispositif de contrôle selon l'une des revendications 1 à 8, caractérisé en ce qu'il est prévu un troisième capteur (11) pour contrôler un dispositif de dosage du semoir ou semoir en lignes.

10. Dispositif de contrôle selon l'une des revendications 1 à 9, caractérisé en ce qu'il est prévu un quatrième capteur pour le contrôle de la quantité de semence introduite par l'intermédiaire d'un tube d'amenée de la semence.

11. Dispositif de contrôle selon l'une des revendications 1 à 10, caractérisé en ce qu'il est prévu un cinquième capteur servant à contrôler l'entraînement d'un dispositif de dosage.

12. Dispositif de contrôle selon l'une des revendications 1 à 11, caractérisé en ce qu'il est prévu un sixième capteur pour le contrôle de la commutation des lignes de déplacement.

13. Dispositif de contrôle selon l'une des revendications 1 à 12, caractérisé en ce qu'il est prévu un septième capteur pour contrôler la vitesse de déplacement de la roue motrice (4).

14. Dispositif de contrôle selon l'une des revendications 1 à 13, caractérisé en ce que le dispositif de commutation et de commande (2) comprend des moyens pour introduire la valeur de consigne respective et pour régler le capteur.

15. Dispositif de contrôle selon l'une des revendications 1 à 14, caractérisé en ce qu'un mécanisme d'actionnement du soc (7) de formation des sillons est relié selon une liaison fonctionnelle au dispositif de commutation et de contrôle (2), pour la commutation automatique du soc (7) à l'extrémité du champ.
